(19) Europäisches Patentamt
European Patent Office
Office européen des brevets

(11) EP 3 203 760 A1

(12) EUROPEAN PATENT APPLICATION

(43) Date of publication:
09.08.2017 Bulletin 2017/32

(51) Int Cl.:
H04S 7/00 (2006.01)          H04R 3/00 (2006.01)
H04S 3/00 (2006.01)

(21) Application number: 16305147.7

(22) Date of filing: 08.02.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• Arnold, Michael
  30916 Isernhagen (DE)
• Drexler, Michael
  30989 Gehrden (DE)
• Keiler, Florian
  30539 Hannover (DE)

(74) Representative: Huchet, Anne et al
TECHNICOLOR
1-5, rue Jeanne d'Arc
92130 Issy-les-Moulineaux (FR)

(54) **METHOD AND APPARATUS FOR DETERMINING THE POSITION OF A NUMBER OF LOUDSPEAKERS IN A SETUP OF A SURROUND SOUND SYSTEM**

(57)    The position of loudspeakers in a setup of a surround sound system is determined by using a mobile device equipped with one or more microphones, which mobile device is positioned at pre-determined positions whereby the positions of the microphones are known. The microphones capture (33) microphone signals from a test signal from each one of the loudspeakers and calculate (42) therefrom corresponding speaker-microphone distance difference signals. From these speaker-microphone distance difference signals and from related microphone positions a matrix containing the distance difference signals and a vector containing the microphone positions are calculated (43). If there are 5 microphone positions the linear equation system $A\vec{x}=\vec{b}$ is solved (45), and if there are more than 5 microphone positions the overdetermined linear equation system $\mathbf{A}\vec{x}=\vec{b}$ is solved (46) by least-square approximation $\vec{x}=\mathbf{A}^{\dagger}\vec{b}$ with $\mathbf{A}^{\dagger}=(\mathbf{A}^{T}\mathbf{A})^{-1}\mathbf{A}^{T}$. The corresponding loudspeaker coordinates $\vec{l}_{k}=[x_{1},x_{2},x_{3}]^{T}$ are stored (47).

Fig. 4

EP 3 203 760 A1

**Description**

Technical field

The invention relates to a method and to an apparatus for determining the position of a number of loudspeakers in a setup of a surround sound system, by using a mobile device equipped with one or more microphones.

Background

Immersive 3D surround sound reproduction requires more and more loudspeakers to accurately render the additional channels. This implicitly requires the correct determination of the position of each loudspeaker to ensure the best calibration for the speaker array.

Summary of invention

Nowadays special devices carrying an array of microphones are necessary for an exact location determination of each speaker. This results in additional cost at user side.
A problem solved by the invention is determining in a cheaper way the positions of loudspeakers in a listening room. This problem is solved by the method disclosed in claim 1. An apparatus that utilises this method is disclosed in claim 2.
Advantageous additional embodiments of the invention are disclosed in the respective dependent claims.
The number of smartphones equipped with more than one microphone (two or three) is increasing. According to the invention, a smartphone having at least two microphones, or more smartphones each equipped with one microphone, are used for determining the direction of loudspeakers in a surround system setup.
The advantage is that such calibration equipment for home theatre setup is today available in nearly every household. The advantages of using mobile devices are

- decrease of cost;
- increase in precision and decrease in calibration time by using more mobile devices carrying additional microphones;
- future improvements are possible by simply updating a calibration app.

In principle, the inventive method is adapted for determining the position of loudspeakers $l_k$ in a setup of a surround sound system including $L$ loudspeakers, $k$ = $1...L$, by using a mobile device equipped with one or more microphones, which mobile device is positioned at pre-determined positions whereby the positions of said microphones are known, representing in total $M$ microphone positions, said method including:

a) capturing using said microphones a test signal $s^k(t)$ from each one of said $L$ loudspeakers, resulting in $M$ microphone signals $y_j^k(t)$, $j$ = 1, ... ,$M$ - 1, per loudspeaker;

b) in a loop over $k$, starting with $k$ = 1;

c) calculating from said microphone signals $y_j^k(t)$, $j$ = 0, ... ,$M$ - 1, corresponding speaker-microphone distance difference signals $d_{0j}^k = c\tau_{0j}^k$, $j$ = 1, ... ,$M$ - 1, $c$ being the speed of sound in air;

d) constructing from said speaker-microphone distance differences $d_{0j}^k = c\tau_{0j}^k$, $j$ = 1, ... ,$M$ - 1, and from related microphone positions $\vec{m}_j$ a matrix $\mathbf{A}$ containing said distance differences $d_{0j}^k = c\tau_{0j}^k$, $j$ = 1, ... ,$M$ - 1, and a vector $\vec{b}$ containing said microphone positions $\vec{m}_j$, $j$ = 0, ...,$M$ - 1;

e) if $M$ = 5, solving the linear equation system $\mathbf{A}\vec{x} = \vec{b}$, and if $M$ > 5, solving the overdetermined linear equation system $\mathbf{A}\vec{x} = \vec{b}$ by least-square approximation $\vec{x} = \mathbf{A}^\dagger\vec{b}$ with $\mathbf{A}^\dagger = (\mathbf{A}^T\mathbf{A})^{-1}\mathbf{A}^T$;

f) storing the corresponding loudspeaker coordinates $\vec{l}_k = [x_1, x_2, x_3]^T$;

g) as long as $k \leq L$, incrementing $k$ by 1 and continuing the processing with step c).

In principle the inventive apparatus is adapted for determining the position of loudspeakers $l_k$ in a setup of a surround sound system including **L** loudspeakers, **k = 1...L,** by using a mobile device equipped with one or more microphones, which mobile device is positioned at pre-determined positions whereby the positions of said microphones are known, representing in total **M** microphone positions, said apparatus including means adapted to:

a) capture using said microphones a test signal **$s^k(t)$** from each one of said **L** loudspeakers, resulting in **M** microphone signals $y_j^k(t)$, **j = 0, ... ,M - 1,** per loudspeaker;

b) in a loop over *k,* start with **k = 1;**

c) calculate from said microphone signals $y_j^k(t)$, **j = 0, ... ,M - 1,** corresponding speaker-microphone distance difference signals $d_{0j}^k = c\tau_{0j}^k$, **j = 1, ... ,M - 1,** *c* being the speed of sound in air;

d) construct from said speaker-microphone distance differences $d_{0j}^k = c\tau_{0j}^k$, **j = 1, ... ,M - 1,** and from related microphone positions $\vec{m_j}$ a matrix **A** containing said distance differences $d_{0j}^k = c\tau_{0j}^k$, **i = 1, ... ,M - 1,** and a vector $\vec{b}$ containing said microphone positions $\vec{m_j}$, **j = 0, ...,M -** 1;

e) if **M = 5,** solve the linear equation system $\mathbf{A}\vec{x} = \vec{b}$**,** and if **M > 5,** solve the overdetermined linear equation system $\mathbf{A}\vec{x} = \vec{b}$ by least-square approximation $\vec{x} = \mathbf{A}^{\dagger}\vec{b}$ with $\mathbf{A}^{\dagger} = (\mathbf{A}^T\mathbf{A})^{-1}\mathbf{A}^T$;

f) store the corresponding loudspeaker coordinates $\vec{l}_k = [x_1, x_2, x_3]^T$ ;

g) as long as **k $\leq$ L,** increment **k** by **1** and continue the processing with step c).

Brief description of drawings

Exemplary embodiments of the invention are described with reference to the accompanying drawings, which show in:

Fig. 1    Speaker and microphone locations;

Fig. 2    Distance differences between speaker and different microphones;

Fig. 3    Microphone signal recording for obtaining a complete set of signals $y_i^k(t)$, **i = 0, ... ,M - 1, k = 1, ... , L ;**

Fig. 4    Speaker position calculation.

Description of embodiments

Even if not explicitly described, the following embodiments may be employed in any combination or sub-combination.

The correct calibration of a multi-channel audio system requires localisation of multiple loudspeakers. This includes the determination of the loudspeaker positions relative to the listener position.

Assuming that the listener position is located in the coordinate origin of a three-dimensional coordinate system, the position of each loudspeaker can be described by a vector in Cartesian *coordinates* $\vec{l}_k = [l_x^k, l_y^k, l_z^k]^T$, **k = 1, ... ,L,** with *L* the number of loudspeakers to be measured.

The vector $\vec{l}_k$ for each speaker **k** can be determined by successive/parallel measurements with devices equipped with microphones. The different steps and equations are described in the following.

*A.1 Components*

In order to calculate loudspeaker positions from measurement data a number of pre-conditions have to be fulfilled:

-    the positions of the microphones have to be known;
-    the Time-Difference-of-Arrival TDOA between a microphone pair and a speaker is to be measured;
-    the loudspeaker involved in the TDOA measurement is to be identified.

*A.1.1 Microphone positions*

The microphone positions have to be known in advance whereas the positions of the loudspeaker are calculated. The location of the microphones can be determined by placing them in pre-configured positions relative to a defined coordinate origin. This can be carried out by using templates (a 2D paper or a 3D rack) for positioning the microphones prior to the measurements.

In the following description it is assumed that the microphones are located at $\vec{m}_i = [m_x^i, m_y^i, m_z^i]^T$, *i* = 0, ..., *M* -

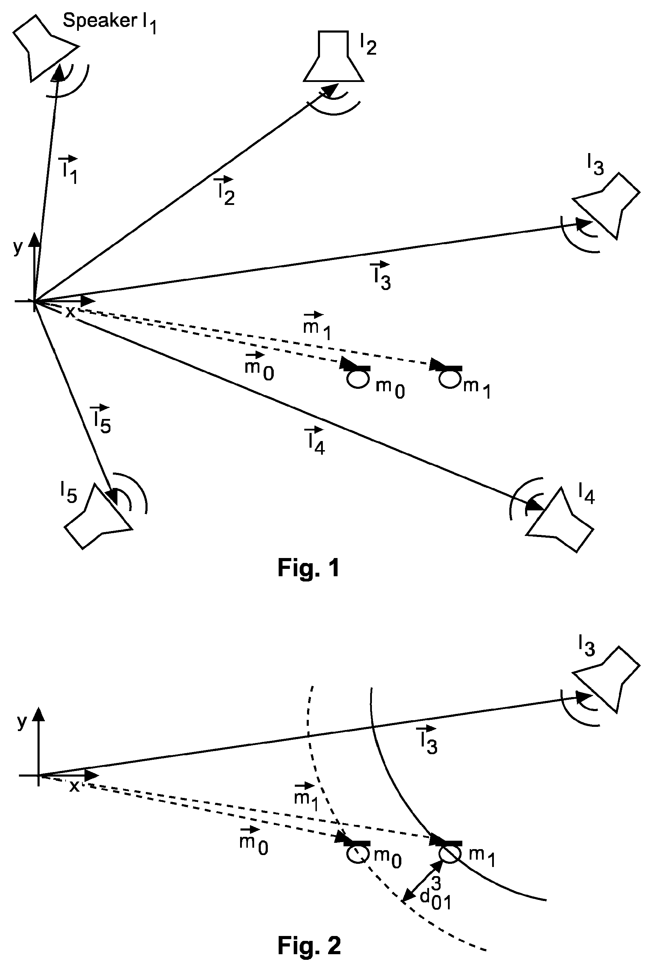

1 and the position of the *L* loudspeakers can be described by the vectors $\vec{l}_k = [l_x^k, l_y^k, l_z^k]^T$, *k* = 1, ... , *L* in Cartesian coordinates, see Fig. 1.

*A.1.2 Speaker identification*

In order to calculate the loudspeaker position a correct mapping of the TDOA to a microphone pair (*i,j*) is needed. This requires the identification of the speaker in the measurement process. This can be implemented by audio watermarks carrying a speaker ID as information, cf. [1]. The usage of audio watermarks for speaker identification purposes offers the possibility of TDOA measurements in parallel to the viewing/listening without use of an additional calibration step. Due to the transmission of the signals in air the audio watermarks have to be robust against acoustic path propagation, see [2].

The watermark IDs for the speaker involved in the measurement can be frequency multiplexed or time multiplexed in one frame. The time frame of all speaker IDs can be repeated in the time domain to improve the speaker position estimation procedure.

The watermark starts with a synchronisation symbol followed by the symbols corresponding to the different speaker IDs. Each symbol is embedded in a time slice with a number of audio blocks derived from the respective audio watermarking processing.

*A.1.3 Time-Difference-of-Arrival (TDOA)*

The invention uses measuring of the time-difference-of-arrival TDOA for different microphone pairs (***i,j***) relative to a loudspeaker. The distance from speaker ***k*** to a microphone *j* is defined by $d_j^k = \| \vec{l}_k - \vec{m}_j \|$, and the distance difference between a microphone pair is $d_{ij}^k = d_i^k - d_j^k$, as depicted in Fig. 2.

A known method for estimating the TDOA is to use the cross-correlation (CC) function

$$R_{ij}^k(\tau) = \mathbb{E}\{y_i^k(t)y_j^k(t-\tau)\} = \int_{-\infty}^{+\infty} Y_i^k(f)Y_j^{k*}(f)e^{2\pi i f \tau}df, \qquad (1)$$

wherein $y_{(i|j)}^k(t)$ are the signals captured by the microphones (*i* or *j* for speaker *k*) and $Y_{(i|j)}^k(f)$ are their respective Fourier transforms. The time delay between the captured signals is obtained by searching the peak in the correlation:

$$\tau_{ij}^k = \operatorname*{argmax}_{\tau} R_{ij}^k(\tau). \qquad (2)$$

In addition, techniques for providing a sharper peak in the measurement and using interpolation for a higher time resolution can be applied.

*A.2 Data collection*

The Time Difference of Arrival (TDOA) is measured for several different orientations of the smartphone. The relative positioning of the microphones to each other is assumed to be known in each measurement position. This can be ensured by a simple sheet of paper with a printed template for positioning the smartphones, or an inexpensive rack with preconfigured positions where the smartphones can be mounted. In order to take into account the geometry of microphone placement, templates related to specific smartphones can be downloaded and printed for measurement purposes.

This can easily be extended to parallel measurements if more than two microphones (respectively devices) are available. In this case the devices with the microphones have to be laid next to each other on special controlled locations in a 2D setting, or put on preconfigured positions in a rack.

In the following it is assumed that **M** microphone positions $\vec{m}_i = [m_x^i, m_y^i, m_z^i]^T$, **i = 0,...,M - 1** are known for the measurement. Their corresponding signals $y_i^k(t)$ are obtained by conducting successive/parallel measurements in order to collect a total of **M** signals for each individual speaker $\vec{l}_k$, **k = 1,...,L.**

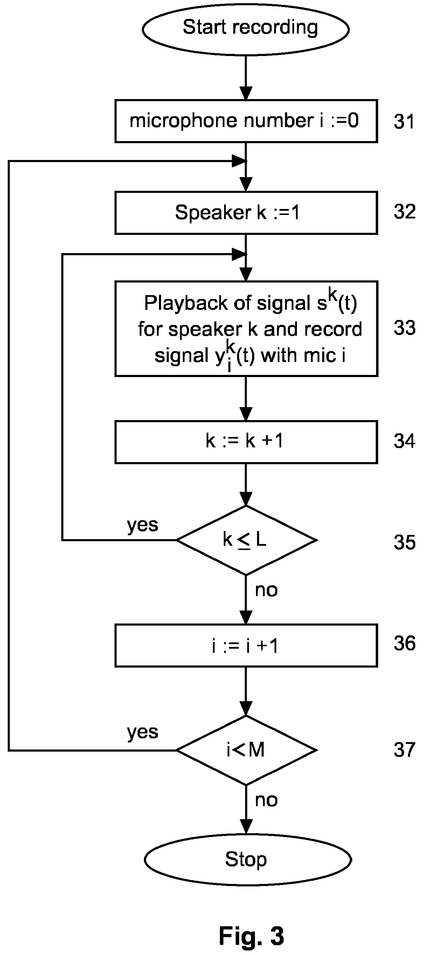

A corresponding data gathering process can be described by the flow chart depicted in Fig. 3. In step 31 the microphone number is initialised and in step 32 the speaker number is set to **k = 1.** In step 33 loudspeaker **k** emits a test signal **s^k(t)** and smartphone microphone **i** records or captures a corresponding signal $y_i^k(t)$. **k** is incremented by **1** in step 34 and in step 35 **k** is compared with **L.** If **k ≤ L,** the processing continues with step 33, otherwise **i** is incremented by **1** in step 36. In step 37 **i** is compared with **M.** If **i < M,** the processing continues with step 32, otherwise the processing stops.

In case of devices carrying more than one microphone, the number of steps for obtaining all signals depends on the specific constellation. If the device consists of two mics, three different orientations of the mics result in *three* successive measurements to collect all signals for all loudspeakers.

An example of *one* parallel measurement for collecting all data is possible if three devices each carrying two microphones are used.

*A.3 Position calculation*

For each of the **L** speakers the data collection procedure provides **M** signals **y_i(t)** related to different microphone positions $\vec{m}_i$ (see section *A.2*). If one position of the microphones **i = 0** is defined as a reference position, **j = 1, ... ,M - 1** pairs of microphones can be configured and corresponding TDOA values $\tau_{0j}^k$ calculated (see section *A.1.3*) for each loudspeaker **k.**

In the following, the distance from the speaker **k** to the microphone **j** is defined as $d_j^k = \parallel \vec{l}_k - \vec{m}_j \parallel$. In turn the distance difference to the speaker for the microphone position **j** and the reference position 0 is defined as

$$d_{0j}^k = c\tau_{0j}^k = d_0^k - d_j^k \qquad (3)$$

wherein c is the speed of sound in air. Because this operation is the same for all loudspeakers, the superscript **k** is omitted in the following derivation. The distance difference above

$$d_j^2 = (d_0 - d_{0j})^2 \qquad (4)$$

$$= d_0^2 - 2d_0d_{0j} + d_{0j}^2 \qquad (5)$$

can be arranged to

$$d_j^2 - d_0^2 = -2d_0d_{0j} + d_{0j}^2 \,. \qquad (6)$$

Using the definition of the distances to the source, the left hand side is equal to

$$d_j^2 - d_0^2 = \parallel \vec{l} - \vec{m}_j \parallel^2 - \parallel \vec{l} - \vec{m}_0 \parallel^2 \,. \qquad (7)$$

This can be expanded to

$$d_j^2 - d_0^2 = (m_x^j - l_x)^2 + (m_y^j - l_y)^2 + (m_z^j - l_z)^2$$
$$-[(m_x^0 - l_x)^2 + (m_y^0 - l_y)^2 + (m_z^0 - l_z)^2]$$
$$= \| \vec{m}_j \|^2 - \| \vec{m}_0 \|^2 - 2l_x(m_x^j - m_x^0) - 2l_y(m_y^j - m_y^0) - 2l_z(m_z^j - m_z^0),$$

which is equal to equation (6) and can be combined into

$$(m_x^j - m_x^0)l_x + (m_y^j - m_y^0)l_y + (m_z^j - m_z^0)l_z - d_{0j}d_0 = \frac{1}{2}(\| \vec{m}_j \|^2 - \| \vec{m}_0 \|^2 - d_{0j}^2). \qquad (8)$$

This is a linear system with the unknown vector $\vec{x} = [l_x, l_y, l_z, d_0]^T$ having four components. For solving this system four equations are required. This corresponds to at least four pairs of microphones or at least five microphones including the reference one.
This can be compactly written as

$$\mathbf{A}\vec{x} = \vec{b} \qquad (9)$$

with matrix

$$\mathbf{A} = \begin{bmatrix} m_x^1 - m_x^0 & m_y^1 - m_y^0 & m_z^1 - m_z^0 & -d_{01} \\ m_x^2 - m_x^0 & m_y^2 - m_y^0 & m_z^2 - m_z^0 & -d_{02} \\ m_x^3 - m_x^0 & m_y^3 - m_y^0 & m_z^3 - m_z^0 & -d_{03} \\ m_x^4 - m_x^0 & m_y^4 - m_y^0 & m_z^4 - m_z^0 & -d_{04} \end{bmatrix} \qquad (10)$$

and vectors

$$\vec{x} = \begin{bmatrix} l_x \\ l_y \\ l_z \\ d_0 \end{bmatrix} \quad \text{and} \quad \vec{b} = \frac{1}{2} \begin{bmatrix} \| \vec{m}_1 \|^2 - \| \vec{m}_0 \|^2 - d_{01}^2 \\ \| \vec{m}_2 \|^2 - \| \vec{m}_0 \|^2 - d_{02}^2 \\ \| \vec{m}_3 \|^2 - \| \vec{m}_0 \|^2 - d_{03}^2 \\ \| \vec{m}_4 \|^2 - \| \vec{m}_0 \|^2 - d_{04}^2 \end{bmatrix}. \qquad (11)$$

Matrix **A** and vector $\vec{b}$ contain the microphone positions $\vec{m}_j$, *j* = 0, ... ,*M* - **1** and the distance differences *d₀ⱼ* for *j* = **1**,...,*M* -**1** between pairs of microphones and a specific speaker. The microphone positions are determined by the geometry of the position template, whereas the distance differences (for each individual speaker) are calculated from the measured TDOA.
In the general case of *M* microphones, **A** is a (*M* - **1**) × **4** matrix and vector $\vec{b}$ has *M* - 1 components. If *M* = **5**, the four dimensional vector $\vec{x}$ can be obtained by solving the linear equation system (9). If *M* > **5** and matrix $\mathbf{A} \in \mathbb{R}^{(M-1) \times 4}$ has full column rank, the solution can be obtained by

$$\vec{x} = \mathbf{A}^\dagger \vec{b} \qquad (12)$$

with the so-called left pseudo-inverse

$$\mathbf{A}^{\dagger} = (\mathbf{A}^T \mathbf{A})^{-1} \mathbf{A}^T. \qquad (13)$$

In order to obtain a solvable system the columns of matrix **A** have to be linearly independent. This requires a microphone geometry without constructing singularities in matrix **A**. For a 3D loudspeaker setup a minimum number of **M = 5** microphone positions is required. After solving the equation system the loudspeaker coordinates for speaker number **k** are taken from the four-element vector $\vec{x}$ by

$$l_x^k = x_1, \; l_y^k = x_2, \; l_z^k = x_3, \qquad (14)$$

where $x_c$ is the c-th element of vector $\vec{x}$.

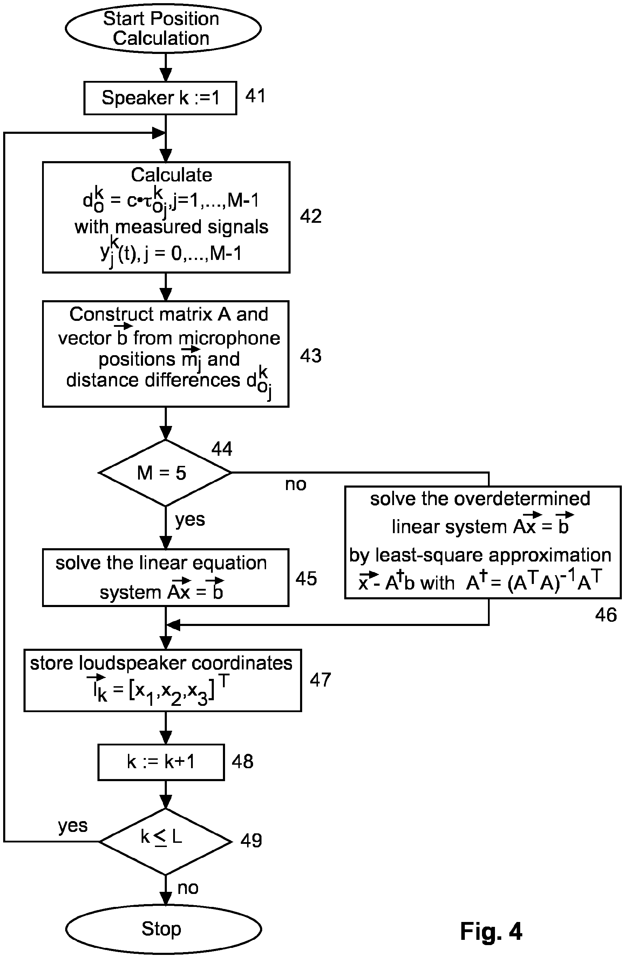

A flow chart for the position calculation is shown in Fig. 4. In step 41 the speaker number is set to $k = 1$. In step 42 $d_{0j}^k = c\tau_{0j}^k$, **j = 1,...,M- 1** is calculated with measured signals $y_j^k(t)$, **j = 0, ..., M - 1.** In step 43 matrix **A** and vector $\vec{b}$ are constructed from microphone positions $\vec{m}_j$ and from the distance differences $d_{0j}^k$.

As mentioned above **M** is the total number of microphones involved. In step 44 it is checked whether **M = 5.** If **M = 5,** the linear equation system $\mathbf{A}\vec{x} = \vec{b}$ is solved in step 45. If **M > 5,** the overdetermined linear system $\mathbf{A}\vec{x} = \vec{b}$ is solved in step 46 by least-square approximation $\vec{x} = \mathbf{A}^{\dagger}\vec{b}$ with $\mathbf{A}^{\dagger} = (\mathbf{A}^T\mathbf{A})^{-1}\mathbf{A}^T$. Thereafter in step 47 the resulting loudspeaker coordinates $\vec{l}_k = [x_1, x_2, x_3]^T$ are stored. **k** is incremented by **1** in step 48 and in step 49 **k** is compared with **L.** If **k ≤ L,** the processing continues with step 42, otherwise the processing stops.

For measurement of 2D loudspeaker positions, the measurement microphones can be placed in the same plane as the loudspeakers and a minimum number of **M = 4** microphones can be used.

The described processing can be carried out by a single processor or electronic circuit, or by several processors or electronic circuits operating in parallel and/or operating on different parts of the complete processing. The instructions for operating the processor or the processors according to the described processing can be stored in one or more memories. The at least one processor is configured to carry out these instructions.

References

[1] EP 2899997 A1

[2] M. Arnold et al., "A Phase-based Audio Watermarking System Robust to Acoustic Path Propagation", IEEE Transactions On Information Forensics and Security, vol.9, March 2014, pp.411-425

**Claims**

1. Method for determining the position of loudspeakers $l_k$ in a setup of a surround sound system including **L** loudspeakers, **k = 1...L,** by using a mobile device equipped with one or more microphones, which mobile device is positioned at pre-determined positions whereby the positions of said microphones are known, representing in total **M** microphone positions, said method including:

    a) capturing (33) using said microphones a test signal $s^k(t)$ from each one of said **L** loudspeakers, resulting in **M** microphone signals $y_j^k(t)$, **j = 0,...,M - 1** per loudspeaker;

    b) in a loop over k, starting (41) with **k = 1;**

    c) calculating (42) from said microphone signals $y_j^k(t)$, **j = 0,...,M - 1** corresponding speaker-microphone distance difference signals $d_{0j}^k = c\tau_{0j}^k$, **j = 1,...,M - 1** c being the speed of sound in air;

d) constructing (43) from said speaker-microphone distance differences $d_{0j}^k = c\tau_{0j}^k$, *j* = **1**,...,*M* - **1** and from related microphone positions $\vec{m_j}$ a matrix **A** containing said distance differences $d_{0j}^k = c\tau_{0j}^k$, *j* = **1**,...,*M* - **1** and a vector $\vec{b}$ containing said microphone positions $\vec{m_j}$, *j* = **0**,...,*M* - **1** ;

e) if *M* = **5**, solving (45) the linear equation system $\mathbf{A}\vec{x} = \vec{b}$, and if *M* > **5**, solving (46) the overdetermined linear equation system $\mathbf{A}\vec{x} = \vec{b}$ by least-square approximation $\vec{x} = \mathbf{A}^{\dagger}\vec{b}$ with $\mathbf{A}^{\dagger} = (\mathbf{A}^T\mathbf{A})^{-1}\mathbf{A}^T$;

f) storing (47) the corresponding loudspeaker coordinates $\vec{l_k} = [x_1, x_2, x_3]^T$ ;

g) as long as (49) *k* ≤ *L*, incrementing (48) *k* by 1 and continuing the processing with step c).

2. Apparatus for determining the position of loudspeakers $l_k$ in a setup of a surround sound system including *L* loudspeakers, *k* = **1 ... L**, by using a mobile device equipped with one or more microphones, which mobile device is positioned at pre-determined positions whereby the positions of said microphones are known, representing in total *M* microphone positions, said apparatus including means adapted to:

a) capture (33) using said microphones a test signal *s^k(t)* from each one of said *L* loudspeakers, resulting in *M* microphone signals $y_j^k(t)$, *j* = **0**,...,*M* - **1** per loudspeaker;

b) in a loop over *k*, start (41) with *k* = **1**;

c) calculate (42) from said microphone signals $y_j^k(t)$, *j* = *0*, ...,*M* - 1 corresponding speaker-microphone distance difference signals $d_{0j}^k = c\tau_{0j}^k$, *j* = **1**, ... ,*M* - **1**, *c* being the speed of sound in air;

d) construct (43) from said speaker-microphone distance differences $d_{0j}^k = c\tau_{0j}^k$, *j* = **1**, ... ,*M* - **1**, and from related microphone positions $\vec{m_j}$ a matrix **A** containing said distance differences $d_{0j}^k = c\tau_{0j}^k$, *j* = **1**, ... ,*M* - **1**, and a vector $\vec{b}$ containing said microphone positions $\vec{m_j}$, *j* = **0**, ... ,*M* - **1** ;

e) if *M* = **5**, solve (45) the linear equation system $\mathbf{A}\vec{x} = \vec{b}$, and if *M* > **5**, solve (46) the overdetermined linear equation system $\mathbf{A}\vec{x} = \vec{b}$ by least-square approximation $\vec{x} = \mathbf{A}^{\dagger}\vec{b}$ with $\mathbf{A}^{\dagger} = (\mathbf{A}^T\mathbf{A})^{-1}\mathbf{A}^T$;

f) store (47) the corresponding loudspeaker coordinates $\vec{l_k} = [x_1, x_2, x_3]^T$ ;

g) as long as (49) *k* ≤ *L*, increment (48) *k* by 1 and continue the processing with step c).

3. Method according to claim 1, or apparatus according to claim 2, wherein said mobile device is a smartphone including an app that controls the processing.

4. Method according to the method of claim 1 or 3, or apparatus according to the apparatus of claim 2 or 3, wherein said speaker-microphone distance difference signals $d_{0j}^k = c\tau_{0j}^k$, *j* = **1**, ... ,*M* - **1** are determined using Time Difference of Arrival processing TDOA, and said TDOA is estimated by using a cross-correlation function

$$R_{0j}^k(\tau) = \mathbb{E}\{y_0^k(t)y_j^k(t-\tau)\} = \int_{-\infty}^{+\infty} Y_0^k(f)Y_j^{k*}(f)e^{2\pi if\tau}df ,$$

with $y_{(0|j)}^k(t)$ being the signals captured by said mobile device microphones and $Y_{(0|j)}^k(f)$ being their respective Fourier transforms, and wherein the time delay between the microphone signals is obtained by searching the peak in the correlation $\tau_{0j}^k = \underset{\tau}{\operatorname{argmax}}\, R_{0j}^k(\tau)$.

5. Method according to the method of one of claims 1, 3 or 4, or apparatus according to the apparatus of one of claims 2 to 4, wherein said loudspeaker test signals $s^k(t)$ are watermarked differently for the purpose of identifying from which loudspeaker a test signal is emitted.

6. Method according to the method of one of claims 1 and 3 to 5, or apparatus according to the apparatus of one of claims 2 to 5, wherein for measurement of 2D loudspeaker positions the measurement microphones are placed in the same plane as the loudspeakers and a minimum number of $M = 4$ microphones is used.

7. Computer program product comprising instructions which, when carried out on a mobile device, perform the method according to one of claims 1 and 3 to 6.

Speaker l$_1$

l$_2$

l$_3$

$\vec{l}_1$

$\vec{l}_2$

$\vec{l}_3$

y

x

$\vec{m}_1$

$\vec{m}_0$

m$_0$

m$_1$

$\vec{l}_5$

$\vec{l}_4$

l$_5$

l$_4$

**Fig. 1**

l$_3$

y

x

$\vec{l}_3$

$\vec{m}_1$

$\vec{m}_0$

m$_0$

m$_1$

$d_{01}^3$

**Fig. 2**

Fig. 3

Start Position
Calculation

Speaker k :=1  41

Calculate
$d_0^k = c \cdot \tau_{0j}^k, j=1,...,M-1$
with measured signals
$y_j^k(t), j = 0,...,M-1$  42

Construct matrix A and
vector $\vec{b}$ from microphone
positions $\vec{m_j}$ and
distance differences $d_{0j}^k$  43

M = 5  44

no

yes

solve the overdetermined
linear system $A\vec{x} = \vec{b}$
by least-square approximation
$\vec{x} = A^\dagger b$ with $A^\dagger = (A^T A)^{-1} A^T$  46

solve the linear equation
system $A\vec{x} = \vec{b}$  45

store loudspeaker coordinates
$\vec{l_k} = [x_1, x_2, x_3]^T$  47

k := k+1  48

yes

$k \leq L$  49

no

Stop

**Fig. 4**

Europäisches
Patentamt

European
Patent Office

Office européen
des brevets

# EUROPEAN SEARCH REPORT

**Application Number**

EP 16 30 5147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/216071 A1 (MAHER DAVID P [US] ET AL) 22 August 2013 (2013-08-22) <br> * figures 1-3 * <br> * paragraph [0013] * <br> * paragraph [0019] * <br> * paragraph [0023] * <br> * paragraph [0024] * <br> * paragraph [0029] * <br> * paragraph [0031] - paragraph [0037] * <br> ----- | 1-7 | INV. <br> H04S7/00 <br> H04R3/00 <br><br> ADD. <br> H04S3/00 |
| A | EP 2 899 720 A1 (THOMSON LICENSING [FR]) 29 July 2015 (2015-07-29) <br> * paragraph [0001] - paragraph [0003] * <br> ----- | 4,5 | |
| A | WO 2013/088279 A1 (KONINKL PHILIPS ELECTRONICS NV [NL]) 20 June 2013 (2013-06-20) <br> * page 1, line 6 - line 11 * <br> ----- | 4 | |

**TECHNICAL FIELDS SEARCHED (IPC)**

H04S
H04R
G10L

The present search report has been drawn up for all claims

| Place of search | Date of completion of the search | Examiner |
|---|---|---|
| The Hague | 22 July 2016 | Mendoza Lopez, Jorge |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 30 5147

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2016

| Patent document cited in search report | | Publication date | Patent family member(s) | | Publication date |
|---|---|---|---|---|---|
| US 2013216071 | A1 | 22-08-2013 | CN 104247461 A | | 24-12-2014 |
| | | | EP 2817980 A1 | | 31-12-2014 |
| | | | JP 2015513832 A | | 14-05-2015 |
| | | | US 2013216071 A1 | | 22-08-2013 |
| | | | WO 2013126603 A1 | | 29-08-2013 |
| EP 2899720 | A1 | 29-07-2015 | NONE | | |
| WO 2013088279 | A1 | 20-06-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2899997 A1

**Non-patent literature cited in the description**

- **M. ARNOLD et al.** A Phase-based Audio Watermarking System Robust to Acoustic Path Propagation. *IEEE Transactions On Information Forensics and Security,* March 2014, vol. 9, 411-425